# EUROPÄISCHE PATENTANMELDUNG

(11) **EP 3 219 413 A1**
(43) Veröffentlichungstag der Anmeldung: **20.09.2017**
(21) Anmeldenummer: 16000641.7
(22) Anmeldetag: 16.03.2016
(51) Int. Cl.: B22F 3/105

(54) **VERFAHREN UND VORRICHTUNG ZUM GENERATIVEN FERTIGEN EINES DREIDIMENSIONALEN BAUTEILS**

(71) Anmelder: Linde Aktiengesellschaft, 80331 München (DE)
(72) Erfinder: Scholz, Jürgen, 81379 München (DE); Miklos, Ernst, 85551 Kirchheim (DE); Fieret, Jim, Bell Hill, Hook Norton OX15 5PS (GB); Foret, Pierre, 80796 München (DE)
(74) Vertreter: Gellner, Bernd

(57) **Zusammenfassung**

Erfindungsgemäß ist ein Verfahren zum generativen Fertigen eines dreidimensionalen Bauteils vorgesehen. Dieses Verfahren umfasst die folgenden Schritte:
- Bereitstellen eines metallischen Ausgangsmaterials in Form eines Pulverbetts
- in einer im Wesentlichen horizontalen Ausgangsebene,
- Zuführen eines Prozessgases zum Ausgangsmaterial,
- Schmelzen des Ausgangsmaterials mit einer Wärmequelle, und
- Wiederholen der vorstehenden Schritte.

Das erfindungsgemäße Verfahren zeichnet sich dadurch aus, dass zumindest ein Teil des Prozessgases durch das Pulverbett hindurch zugeführt wird.

## Beschreibung

Die vorliegende Erfindung betrifft ein Verfahren und eine Vorrichtung zum generativen Fertigen eines dreidimensionalen Bauteils.

Mittels generativer Fertigungsverfahren ist es möglich, verschiedenste dreidimensionale Bauteile mit komplexer Geometrie herzustellen.

Beim 3D-Drucken werden beispielsweise dreidimensionale Werkstücke schichtweise aufgebaut. Der Aufbau erfolgt computergesteuert aus einem oder mehreren flüssigen oder festen Werkstoffen nach vorgegebenen Maßen und Formen (CAD). Beim Aufbau finden physikalische oder chemische Härtungs- oder Schmelzprozesse statt. Typische Werkstoffe für das 3D-Drucken sind Kunststoffe, Kunstharze, Keramiken und Metalle. 3D-Drucker werden in der Industrie und der Forschung eingesetzt. Daneben gibt es auch Anwendungen im Heim- und Unterhaltungsbereich sowie in der Kunst.

Der 3D-Druck ist ein generatives beziehungsweise additives Fertigungsverfahren. Die wichtigsten Techniken des 3D-Druckens sind das selektive Laserschmelzen und das Elektronenstrahlschmelzen für Metalle und das selektive Lasersintern für Polymere, Keramik und Metalle, die Stereolithografie und das Digital Light Processing für flüssige Kunstharze und das Polyjet-Modeling sowie das Fused Deposition Modeling für Kunststoffe und teilweise Kunstharze.

Ein weiteres generatives Verfahren ist das punktuelle Aufschmelzen und Erstarren. Bei dieser Art von Verfahren wird Metallpulver oder Metalldraht schichtweise aufgeschmolzen und erstarrt, sodass ein dreidimensionales Bauteil generiert werden kann. Durch die lokal begrenzte Energieeinbringung mittels Laserstrahl ist die Größe des ausgebildeten Schmelzbades gering. Somit besteht die Möglichkeit, filigrane Strukturen zu erzeugen. Entsprechende Verfahren werden als Laser Engineered Net Shaping (LENS), als Direct Metal Deposition (DMD), als Laser Additive Manufacturing (LAM), als Selective Laser Melting (SLM), als Laser Metal Fusion (LMF) oder als Laser Metal Deposition (LMD) kommerziell vertrieben.

Beim lokalen Laser-Sintern oder Schmelzen wird zwischen indirekten und direkten Verfahren unterschieden.

Selektives Laser-Sintern (SLS) ist ein Verfahren, um räumliche Strukturen durch Sintern aus einem pulverförmigen Ausgangsstoff herzustellen. Lasersintern ist ein generatives Schichtbauverfahren: das Werkstück wird Schicht für Schicht aufgebaut. Durch die Wirkung der Laserstrahlen können so beliebige dreidimensionale Geometrien auch mit Hinterschneidungen erzeugt werden, z.B. Werkstücke, die sich in konventioneller mechanischer oder gießtechnischer Fertigung nicht herstellen lassen.

Beim selektiven Laser-Sintern (SLS/LMF) wird auf einer Arbeitsfläche (Bauplattform) eine Schicht Pulverwerkstoff aufgetragen. Das lose Pulver wird durch einen Laserstrahl punktuell aufgeschmolzen. Dabei werden die Pulverpartikel je nach verwendetem Werkstoff in der Schicht und mit der darunter liegenden Schicht verbunden. Für die Herstellung metallischer Bauteile können zwei grundsätzliche Entwicklungsrichtungen differenziert werden. Neben der direkten Verfestigung metallischer Pulverwerkstoffe durch Laserstrahlung (direktes Metall-Laser-Sintern) hat sich bereits frühzeitig die Herstellung metallischer Bauteile über eine Kombination aus SLS von Kunststoff ummanteltem Metallpulver mit nachträglicher thermischer Behandlung (IMLS) etabliert.

Beim direkten Metall-Laser-Sintern (DMLS) werden entweder ein- oder mehrkomponentige Metallwerkstoffe verwendet. Insbesondere werden dabei DMLS-Mehrkomponentenpulver verwendet, die aus verschiedenen Legierungselementen bestehen. Die im Pulver enthaltene niedrig schmelzende Komponente wird durch einen Laserstrahl aufgeschmolzen und umfließt die hochschmelzende Komponente, die als Strukturgeber dient.

Beim Electron Beam Melting (EBM) entspricht der Prozessablauf im Wesentlichen dem der Laser-basierten Verfahren. Loses Metallpulver, im Pulverbett oder über eine Düse, oder Draht wird dabei punktuell aufgeschmolzen, und erstarrt anschließend in der gewünschten Kontur. Die dafür erforderliche Energie wird durch einen Elektronenstrahl eingebracht. Das Verfahren erfolgt meistens in einer Inertgas gefluteten Unterdruck-Kammer.

Demgemäß werden bei generativen Fertigungsverfahren ein Pulverbett, eine Pulverzuführung oder eine Drahtzuführung verwendet, wobei diese Ausgangsmaterialien dann mittels Laserstrahl, Elektronenstrahl, Plasma-/Lichtbogen aufgeschmolzen und anschließend verfestigt werden. Weiterhin werden bei den generativen Fertigungsverfahren Inert- oder Aktivgase als Prozessgase verwendet.

Bei Verwendung einer Inertgasatmosphäre verbleibt die Zusammensetzung des aufgebrachten Ausgangsmaterials im Wesentlichen unverändert, nachdem sie mittels einer Wärmequelle aufgeschmolzen wurden. Durch die Aufschmelzung, Erstarrung und Wärmeeinflusszonen werden die metallurgischen Eigenschaften gegenüber dem ursprünglichen Material verändert.

Die Prozessgasatmosphäre bei Vorrichtungen zum generativen Fertigen, wie z.B. bei Laser-Schmelz-Vorrichtungen (LMF(laser metal fusion)-Vorrichtungen), wird kontinuierlich durch Hinzufügen von sauberem Prozessgas gereinigt, um Verunreinigungen unterhalb eines erlaubten Schwellenwerts zu halten.

Weiterhin wird bei diesem Verfahren ein aufzubauendes Bauteil schrittweise mit Metallpulver verdeckt, was dazu führt, dass im Bauteil Hitze gestaut wird, die nicht mittels Konvektion entfernbar ist.

LMF-Verfahren finden in einer Prozesskammer statt, die mit einem Prozessgas gefüllt ist. Üblicherweise wird dabei ein Inertgas verwendet, bei dem die Verunreinigungen strickt kontrolliert werden müssen. Beispielsweise darf der Sauerstoffgehalt nicht einen bestimmten Schwellenwert zwischen 1 ppm und 1000ppm übersteigen. Ein weiteres Beispiel für Verunreinigungen ist die im Prozessraum vorliegende Feuchtigkeit, die ebenfalls streng kontrolliert werden muss. Weiter Beispiele für Verunreinigungen sind Stickstoff, Wasserstoff, CO₂ und andere Gase.

Wenn die Prozesskammer geöffnet wird, um ein hergestelltes Bauteil zu entnehmen und um anschließend mit der Herstellung eines neuen Bauteils zu beginnen, tritt Umgebungsluft in die Prozesskammer ein. Diese Umgebungsluft muss durch Spülen der Kammer mit Inertgas entfernt werden, bis ein Sauerstoffanteil auf einen bestimmten Schwellenwert gesunken ist. Das Gas zum Spülen wird in die Prozesskammer über einen oder mehrere Gaseinlässe eingebracht. Das Spülen der Kammer benötigt relativ viel Zeit, insbesondere wenn die Schwellenwerte der Verunreinigungen niedrig sind.

Eine andere Quelle für Verunreinigungen ist das Pulver selbst, das Verunreinigungen an der Oberfläche der Partikel absorbiert haben kann, die dann während des Schmelzprozesses frei gesetzt werden und dadurch die Prozessgasatmosphäre kontaminieren. Daher findet ein kontinuierlicher Reinigungsvorgang bzw. Spülvorgang der Prozesskammer statt, um die Verunreinigungen unterhalb eines erlaubten Schwellenwertes zu halten.

Weiterhin ist der im herzustellenden Bauteil auftretende Hitzestau ein limitierender Faktor für den Herstellungsprozess. Die sich im Bauteil anstauende Hitze wird momentan nur durch thermische Konduktivität im aufzubauenden Bauteil selbst entfernt, da der Wärmeübergang zum umgebenden Pulver sehr schlecht ist. Dies liegt daran, dass es keinen richtigen Grenzbereich zwischen dem herzustellenden Bauteil und dem umgebenden Pulverpartikeln gibt, daher ist der Wärmeübergang auf die umgebende Partikel gering, da das zwischen den Partikeln vorliegende Gas eine Isolationswirkung hat.

Da sich die Wärme im aufzubauenden Bauteil immer weiter aufstaut, verändern sich die Prozessparameter permanent während des Herstellungsprozesses und führen zu unterschiedlichen Schmelzverhalten der Pulverpartikel. Dies beeinflusst die Geometrie, das Zusammenfügen und das Aneinanderhaften der Pulverpartikel. Je mehr Hitze sich im Bauteil staut, desto mehr Prozessinstabilitäten treten auf.

Sich verändernde Wärmebedingungen, insbesondere lokal begrenzt auf den Schmelzbereich als auch im gesamten Bauteil, können metallurgische Konsequenzen haben, die beispielsweise die Korngröße und die Kristallisation beeinflussen. Im Pulverbett vorhandene Verunreinigungen wie z. B. O₂ und H₂O usw. werden während des Prozesses freigesetzt.

Aufgabe der vorliegenden Erfindung ist es daher ein LMF-Verfahren und eine LMF-Vorrichtung bereitzustellen, bei denen die Prozesskammer bzw. die Prozessgasatmosphäre effizient und auf einfach Art und Weise und insbesondere schneller von Verunreinigungen befreit werden kann.

Eine weitere Aufgabe der vorliegenden Erfindung besteht darin ein LMF-Verfahren und eine LMF-Vorrichtung bereitzustellen, bei dem sich die im Bauteil aufstauende Wärme schneller und effizienter abführen lässt.

Diese Aufgaben werden durch die unabhängigen Ansprüche gelöst. Vorteilhafte Ausgestaltungen sind in den Unteransprüchen angegeben.

Erfindungsgemäß ist ein Verfahren zum generativen Fertigen eines dreidimensionalen Bauteils vorgesehen. Dieses Verfahren umfasst die folgenden Schritte:
- Bereitstellen eines metallischen Ausgangsmaterials in Form eines Pulverbetts in einer im Wesentlichen horizontalen Ausgangsebene,
- Zuführen eines Prozessgases zum Ausgangsmaterial,
- Schmelzen des Ausgangsmaterials mit einer Wärmequelle, und
- Wiederholen der vorstehenden Schritte.
Das erfindungsgemäße Verfahren zeichnet sich dadurch aus, dass zumindest ein Teil des Prozessgases durch das Pulverbett hindurch zugeführt wird.

Dadurch, dass das Prozessgas örtlich begrenzt im Bereich des Pulverbetts zugeführt wird ist der Wärmehaushalt des Pulverbetts und/oder des zu fertigenden Bauteils regulierbar und/oder es erfolgt eine Reinigung der Prozessgasatmosphäre, insbesondere im Bereich des Pulverbetts, und/oder der Partikel des Metallpulvers.

Ein Kühlen des im Pulverbett angeordneten Bauteils ist mit bekannten Vorrichtungen nicht möglich. Dadurch, dass das Prozessgas im Bereich des Pulverbetts zugeführt wird, ist der Wärmehaushalt des Pulverbetts bzw. des zu fertigenden Bauteils regulierbar.

Unter dem Begriff Regulieren des Wärmehaushaltes wird im Rahmen der vorliegenden Erfindung ein Temperieren des Pulverbetts bzw. des herzustellenden Bauteils verstanden, was sowohl das Kühlen als auch das Erwärmen des Pulverbetts bzw. des herzustellenden Bauteils mittels Prozessgas umfasst.

Somit ist die im Bauteil gestaute Hitze effizient entfernbar.

Weiterhin wird durch die unmittelbare Nähe des Bereichs, in dem das Prozessgas in die Prozesskammer eintritt, zum Pulverbett eine konstante Atmosphäre beim generativen Fertigen des Bauteils an der obersten Schicht des Bauteils erzeugt.

Auf diese Weise bleiben die Prozessparameter stabil und es sind homogene metallurgische Effekte während der Herstellung erzielbar.

Mittels des erfindungsgemäßen Verfahrens ist es zudem auf einfache Art und Weise möglich bei Vorrichtungen zum generativen Fertigen, wie z.B. bei LMF-Vorrichtungen, die ein Pulverbett verwenden durch das Hinzufügen von sauberem Prozessgas durch das Pulverbett hindurch, die Verunreinigungen unterhalb eines erlaubten Schwellenwerts zu halten. Durch die Einbringung von sauberem Gas, örtlich begrenzt im Bereich des Pulverbetts, sind Verunreinigungen die im Prozessraum und/oder im Metallpulver vorliegen wie z.B. Feuchtigkeit Stickstoff, Wasserstoff, CO₂ und andere Gase schnell und effizient aus diesem Bereich austreibbar.

Zum Zuführen des Prozessgases kann eine Verteilereinrichtung vorgesehen sein, die mehrere Öffnungen zum Beaufschlagen des Pulverbetts mit Prozessgas aufweist, über die das Pulverbett insbesondere im Bereich des herzustellenden Bauteils mit Prozessgas beaufschlagt wird.

Die Strömung des Prozessgases kann im Wesentlichen senkrecht zur Ausgangsebene in Richtung des herzustellenden Bauteils erfolgen.

Dadurch, dass das Gas durch das Pulverbett nach oben strömt, wird ein verbesserter Wärmetransfer vom aufzubauenden Bauteil über erzwungene Konvektion erreicht.

Der durch das erfindungsgemäße Verfahren erzielte Durchzug durch das Pulverbett wird durch lokale Überdrücke bzw. durch die Gasinjektion über die Öffnungen der Verteilereinrichtung erzielt. Wenn das Prozessgas die Wärme vom aufzubauenden bzw. herzustellenden Bauteil aufnimmt, erwärmt sich dieses und beschleunigt auf seinem Weg nach oben. Diese lokale Beschleunigung erhöht die Konvektion und gewährleistet einen schnelleren Nachfluss bzw. eine schnellere Verfügbarkeit von kaltem Gas von unterhalb des Pulverbetts.

Wenn das Gas das Pulverbett verlässt, ist seine Temperatur höher als die der übrigen Prozessatmosphären-Temperatur. Die kontinuierliche Konvektion unterstützt eine effiziente Ausbringung des Prozessgases in einem oberen Bereich der Prozesskammer.

Demgemäß ist erfindungsgemäß vorgesehen, dass das Prozessgas nicht nur das Pulverbett und das herzustellende Bauteil kühlt, sondern auch Verunreinigungen aus der Prozessgas-Atmosphäre und/oder dem Pulver entfernt.

Insbesondere ist beim erfindungsgemäßen Verfahren vorteilhaft, dass die Kühlung des Bauteils einen schnelleren Schichtaufbau bzw. schnellere Prozessraten erlaubt. Der Ablauf des Herstellungsprozesses unter stabilen thermischen Bedingungen im Pulverbett hat positiven Einfluss hinsichtlich der Schmelzpunkte, in denen der Laserstrahl auf das Metallpulver auftrifft, verbessert die Prozessstabilität und die Reproduzierbarkeit.

Zudem sind die konstanten Temperaturen im Arbeitsbereich des Laserstrahls zum sicheren Schmelzen und lokalen Verbinden der Metallpulverpartikel notwendig.

Dadurch, dass das Metallpulver durch das örtlich begrenzte Beaufschlagen mit Prozessgas weniger Verunreinigungen enthält, sind Bauteile mit höherer Qualität und mit weniger Nachbearbeitung herstellbar.

Ein weiterer wesentlicher Vorteil der vorliegenden Erfindung besteht darin, dass dadurch, dass das Gas unterhalb des Pulverbetts bzw. durch dieses hindurch zugeführt wird Turbulenzen bzw. Verwirbelungen in der Prozesskammer vermieden werden. Derartige Turbulenzen bzw. Verwirbelungen werden bei aus dem Stand der Technik bekannten Vorrichtungen meist durch das Einbringen eines Gasstroms oberhalb des Pulverbetts erzeugt.

Die Erfinder der vorliegenden Erfindung haben zudem erkannt, dass das Pulverbett, wenn man es von unten mit einem Prozessgas beaufschlagt, wie ein großer Diffusor wirkt, der lokale Verwirbelungen vermeidet. Dies trägt ebenfalls zu stabileren Prozessparametern und einer reproduzierbaren Qualität bei.

Das Prozessgas kann vor dem Eintritt in die Prozesskammer, in der das Bauteil hergestellt wird, mittels einer Temperiereinrichtung temperiert werden.

Der Kühleffekt kann durch die Verwendung von Gasen oder Gasmischungen mit einem besseren Wärmeübergang und besseren Wärmeleiteigenschaften erhöht werden.

Hierfür können vorzugsweise, die bei Laser-Schmelz-Vorrichtungen üblicherweise verwendeten Prozessgase wie z.B. Ar oder N₂, gemischt mit He und/oder H₂ verwendet werden. Möglich sind auch Gemische aus Ar, N₂ als Basis mit He und/oder H₂ und/oder O₂ und/oder CO₂ und/oder Silan und/oder CO oder N₂, wobei die Zusammensetzung davon abhängig ist wie das Bauteil über die Prozessgaszusammensetzung beeinflusst werden soll.

Zudem kann als Prozessgas beispielsweise reines Helium oder Gasmischungen die Helium oder H₂ enthalten vorgesehen sein.

Die vorstehend genannten Prozessgase führen die Wärme besser vom Bauteil und von den daran angrenzenden Pulverpartikeln ab.

Aufgrund der geringen Viskosität von Helium trägt dieses bspw. dazu bei, Verunreinigungen, die durch das Metallpulver freigesetzt werden, besser auf der Prozessgas-Atmosphäre zu entfernen. H₂ kann beispielsweise lokal aufgespalten werden und mit atomaren O₂ im Bereich des herzustellenden Bauteils reagieren. Die Oxidation der lokal erwärmten Metallpartikel im Pulverbett zu verhindern, erhöht auch die Fähigkeit oder erleichtert auch das Recyceln des Metallpulvers.

Weiterhin ist erfindungsgemäß eine Vorrichtung zum generativen Fertigen eines Bauteils vorgesehen.

Diese Vorrichtung umfasst:
- eine horizontal angeordnete Bauplattform zur Aufnahme des in Form eines Pulverbetts vorliegenden Ausgangsmaterials
- einen Vorratsbehälter ist zur Aufnahme eines verfestigbaren pulverförmigen Ausgangsmaterials
- eine Auftragungseinrichtung zum Aufbringen des Ausgangsmaterials auf die Bauplattform
- einen Laser zum Erzeugen eines Laserstrahls
- eine Prozessgaszuführeinrichtung ist.

Die erfindungsgemäße Vorrichtung zeichnet sich dadurch aus, dass die Bauplattform eine mehrere Gaszuführöffnungen aufweisende Verteilereinrichtung zum Beaufschlagen zumindest eines Teilbereichs des Pulverbetts mit Prozessgas aus der Prozessgaszuführeinrichtung umfasst.

Die Vorteile der erfindungsgemäßen Vorrichtung sind im Wesentlichen dieselben Vorteile, die bereits vorstehend zum erfindungsgemäßen Verfahren erläutert wurden.

Die Gaszuführöffnungen können im Wesentlichen senkrecht zur Ausgangsebene in Richtung Bauteil verlaufen.

Die Verteilereinrichtung kann ein Sieb, eine membranartige Struktur, eine perforierte Folie, ein gesinterter Körper oder eine Düsenplatte sein, die die Gaszuführöffnungen ausbilden.

Weiterhin kann eine Prozesszuführeinrichtung vorgesehen sein, die einen Vorratsbehälter für Prozessgas aufweist, der über einen Leitungsabschnitt mit der Verteilereinrichtung verbunden ist.

Die Temperiereinrichtung kann eine Düse zum Eindüsen eines Kühlmediums, vorzugsweise eines kryogenen Mediums in einer Mischkammer in das Prozessgas aufweisen.

Die Temperiereinrichtung kann auch eine Wärmeübertragungseinrichtung zum Kühlen oder Heizen des Prozessgases sein.

Die Temperiereinrichtung kann auch Kühlkanäle oder Heizelemente umfassen, die integraler Bestandteil der Verteilereinrichtung sind.

Weiterhin kann eine Steuereinrichtung zum Steuern der Temperiereinrichtung vorgesehen sein. Die Steuereinrichtung kann eine Temperaturreglereinrichtung mit einem geschlossenen Regelkreis umfassen, die die Temperatur regelt. Die Temperaturreglereinrichtung erfasst mittels zumindest eines Temperatursensors einen Ist-Wert einer Temperatur des Prozessgases und/oder der Prozessgasatmosphäre und/oder des Bauteils und vergleicht diesen mit einem vorgegebenen Sollwert, wobei über ein Stellglied der vorgegebene Sollwert eingestellt wird.

Die Erfindung wird im Folgenden an Hand einer Figur näher erläutert.

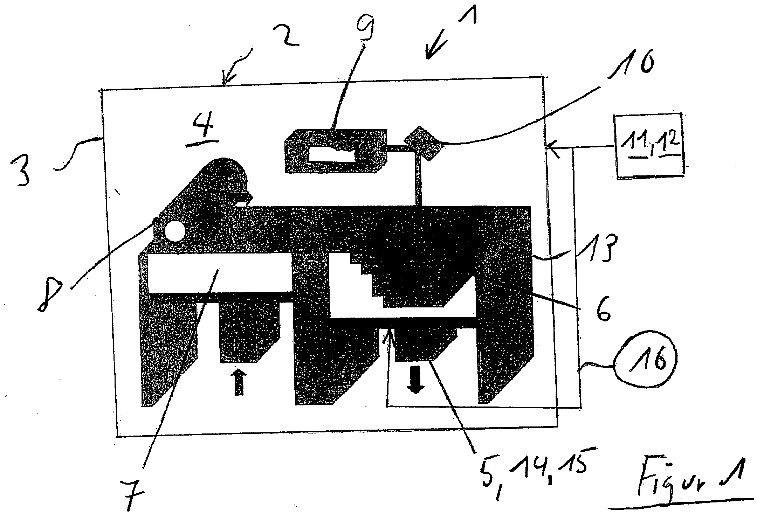

Figur 1 eine schematische Darstellung einer erfindungsgemäßen Vorrichtung.

Im Folgenden wird eine Vorrichtung 1 zum generativen Fertigen und Kodieren eines dreidimensionalen Bauteils beschrieben. Grundsätzlich ist, wie bereits vorstehend erwähnt, jede Vorrichtung zum generativen Fertigen von dreidimensionalen Bauteilen zum Ausführen des erfindungsgemäßen Verfahrens geeignet.

Die Vorrichtung ist eine Laser-Schmelz-Vorrichtung 1. Die Laser-Schmelz-Vorrichtung 1 umfasst eine Prozesskammer 2, die durch eine Kammerwandung 3 nach außen hin abgeschlossen ist und einen Prozessraum 4 begrenzt. Die Prozesskammer 2 dient als Bauraum für das dreidimensionale Bauteil.

In der Prozesskammer 2 ist ein nach oben offener Behälter 13 angeordnet. In dem Behälter 13 ist eine Bauplattform 5 zur Aufnahme des zu fertigenden Bauteils 8 angeordnet. Die Bauplattform 5 weist eine Höhenverstelleinrichtung (nicht dargestellt) auf, mittels der die Bauplattform 5 in vertikaler Richtung derart einstellbar ist, dass eine Oberfläche einer neu zu verfestigenden Schicht in einer Arbeitsebene liegt.

Die Bauplattform 5 ist als eine mehrere Gaszuführöffnungen aufweisende Verteilereinrichtung 14 zum Beaufschlagen zumindest eines Teilbereichs des Pulverbetts mit Prozessgas ausgebildet.

Die Gaszuführöffnungen verlaufen im Wesentlichen senkrecht zur Ausgangsebene in Richtung Bauteil.

Die Verteilereinrichtung kann ein Sieb, eine membranartige Struktur, eine perforierte Folie, ein gesinterter Körper oder eine Düsenplatte sein.

Weiterhin umfasst die Vorrichtung 1 einen Vorratsbehälter 7. Der Vorratsbehälter 7 ist zur Aufnahme eines verfestigbaren pulverförmigen Ausgangsmaterials ausgebildet.

Zudem ist eine Auftrageinrichtung 8 zum Aufbringen des Ausgangsmaterials auf die Bauplattform 5 vorgesehen. Eine solche Auftrageinrichtung 8 ist in horizontaler Richtung parallel zu der Arbeitsebene beweglich.

In der Prozesskammer ist ein Laser 9 zum Erzeugen eines Laserstrahls bzw. eine Wärmequelle angeordnet. Ein von dem Laser 9 erzeugter Laserstrahl wird über eine Umlenkeinrichtung 10 umgelenkt und durch eine Fokussiereinrichtung (nicht dargestellt) auf einen vorbestimmten Punkt unmittelbar unterhalb der Arbeitsebene fokussiert. Mittels der Umlenkeinrichtung 10 kann der Verlauf des Laserstrahls derart verändert werden, dass er die dem Querschnitt des herzustellenden Objekts entsprechenden Stellen der aufgetragenen Schicht aufschmilzt.

Zudem ist eine Prozessgaszuführeinrichtung 11 vorgesehen, mittels der die Prozesskammer 2 mit einem Prozessgas beaufschlagbar ist.

Die Prozessgaszuführeinrichtung 11 weist einen Vorratsbehälter für das Prozessgas auf, wobei der Prozessgasvorratsbehälter (nicht dargestellt) über einen Leitungsabschnitt mit der Verteilereinrichtung 14 verbunden ist. Alternativ kann die der Prozessgasvorratsbehälter mit der Verteilereinrichtung 14 verbunden und über einen Einlass direkt mit der Prozesskammer verbunden sein.

Weiterhin ist eine Temperiereinrichtung 12 vorgesehen.

In diesen Leitungsabschnitt ist vorzugsweise eine Temperiereinrichtung 12 zum Temperieren des Prozessgases integriert.

Gemäß einem ersten Ausführungsbeispiel umfasst die Temperiereinrichtung 12 eine Wärmeübertragungseinrichtung bzw. eine Wärmetauschereinrichtung mittels der das Prozessgas temperierbar ist, bevor es in die Prozesskammer eintritt.

Gemäß einem weiteren Ausführungsbeispiel umfasst die Temperiereinrichtung 12 eine Temperierkammer. In der Temperierkammer ist zumindest eine Düse vorgesehen, die mit einem Vorratsbehälter für ein kryogenes Medium verbunden ist, um kryogenes Medium in die Temperierkammer derart einzudüsen, dass das Prozessgas gekühlt wird.

Somit ist über die Düse der Temperierkammer kryogenes Medium zuführbar. Auf diese Weise lässt sich das Prozessgas und somit das in der Prozesskammer herzustellende Bauteil kühlen.

Die Temperiereinrichtung 12 kann auch als eine Wärmetauschereinrichtung ausgebildet sein.

Weiterhin kann die Verteilertemperiereinrichtung 15 zusätzlich oder alternativ zur vorstehend beschriebenen Temperiereinrichtung 12 vorgesehen sein, die Kühlkanäle oder Heizelemente umfasst, so dass Vereteilertemperiereinrichtung 15 integraler Bestandteil der Verteilereinrichtung ist.

Es könne auch zwei Temperiereinrichtung 12 vorgesehen sein, so dass eine externe Temperiereinrichtung (außerhalb der Prozesskammer angeordnet) und eine Temperiereinrichtung integraler Bestandteil der Verteilereinrichtung 14 ist.

Weiterhin umfasst die Temperiereinrichtung 12 eine Steuereinrichtung (nicht dargestellt) zum Steuern der Temperiereinrichtung. Die Steuereinrichtung kann eine Temperaturreglereinrichtung (nicht dargestellt) mit einem geschlossenen Regelkreis umfassen, die die Temperatur regelt. Die Temperaturreglereinrichtung kann einen P-Regler, einen I-Regler, einen D-Regler und Kombinationen daraus, wie z.B. einen PID-Regler umfassen. Die Temperaturreglereinrichtung erfasst mittels zumindest eines Temperatursensors einen Ist-Wert einer Temperatur des Prozessgases und/oder der Prozessgasatmosphäre und/oder des Bauteils 6 und vergleicht diesen mit einem vorgegebenen Sollwert, wobei über ein Stellglied der vorgegebene Sollwert eingestellt wird.

Im Folgenden wird ein erfindungsgemäßes Verfahren anhand eines ersten Ausführungsbeispiels beschrieben.

Dabei wird im ersten Schritt ein metallisches Ausgangsmaterial auf der Bauplattform in Form eines Pulverbetts mittels der Beschichtungseinrichtung aufgebracht bzw. bereitgestellt. Alternativ kann das metallische Ausgangsmaterial auch mittels einer Pulverzuführung oder einer Drahtzuführung zugeführt werden.

Anschließend wird in einem zweiten Schritt das Prozessgas aus einem Prozessgasvorratsbehälter der Temperierkammer der Temperiereinrichtung zugeführt.

Das Prozessgas wird dann in einem nächsten Schritt über die Verteilereinrichtung dem Pulverbett bzw. der Prozesskammer zugeführt. Diesbezüglich wird auf die vorstehend beschriebenen Vorteile verwiesen.

In einem nächsten Schritt wird das Ausgangsmaterial mittels des Lasers aufgeschmolzen.

Diese Schritte werden wiederholt.

Das Temperieren wird von einer Steuer- bzw. Temperaturreglereinrichtung geregelt, wobei mittels zumindest eines Temperatursensors ein Ist-Wert einer Temperatur des Prozessgases und/oder der Prozessgasatmosphäre und/oder des Bauteils erfasst wird, mit einem vorgegebenen Sollwert verglichen wird und über ein Stellglied der vorgegebene Sollwert eingestellt wird.

Um den Sollwert zu erreichen wird in einem Zwischenschritt je nach Bedarf ein kryogenes Medium aus einem Vorratsbehälter für kryogens Medium in die Temperierkammer eingedüst und auf diese Weise das Prozessgas abgekühlt.

Das gekühlte Prozessgas wird dann der Prozesskammer zugeführt. Durch Zuführung des gekühlten Prozessgases ist die Temperatur des Herzustellenden Bauteils beeinflussbar.

Auf diese Weise lässt sich die Temperatur des Bauteils optimal einstellen.

Diese Schritte werden wiederholt bis das Bauteil fertiggestellt ist.

Dadurch, dass das Metallpulver durch das örtlich begrenzte Beaufschlagen mit Prozessgas weniger Verunreinigungen enthält, sind Bauteile mit höherer Qualität und mit weniger Nachbearbeitung herstellbar.

Zudem kann ein Stabilisierungsschritt vorgesehen sein, in dem die Schicht abgekühlt und verfestigt wird. Das Verfestigen findet meist schon während der Prozess an anderer Stelle im Bauraum statt oder wenn die nächste Pulverlage aufgebracht wird.

### Bezugszeichenliste:

- 1: Vorrichtung
- 2: Prozesskammer
- 3: Kammerwandung
- 4: Prozessraum
- 5: Bauplattform
- 6: Bauteil
- 7: Vorratsbehälter
- 8: Auftrageinrichtung
- 9: Laser
- 10: Umlenkeinrichtung
- 11: Prozessgaszuführeinrichtung
- 12: Temperiereinrichtung
- 13: Behälter
- 14: Verteilereinrichtung
- 15: Verteilertemperiereinrichtung
- 16: Steuereinrichtung

## Patentansprüche

1. Verfahren zum generativen Fertigen eines dreidimensionalen Bauteils umfassend die folgenden Schritte
- Bereitstellen eines metallischen Ausgangsmaterials in Form eines Pulverbetts in einer im Wesentlichen horizontalen Ausgangsebene,
- Zuführen eines Prozessgases zum Ausgangsmaterial,
- Schmelzen des Ausgangsmaterials mit einer Wärmequelle,
- Kühlen und Verfestigen,
- Wiederholen der vorstehenden Schritte
**dadurch gekennzeichnet,**
**dass** zumindest ein Teil des Prozessgases durch das Pulverbett hindurch zugeführt wird.

2. Verfahren nach Anspruch 1,
**dadurch gekennzeichnet,**
**dass** zum Zuführen des Prozessgas eine Verteilereinrichtung vorgesehen ist, die mehrere Öffnungen zum Beaufschlagen des Pulverbetts mit Prozessgas aufweist, über die das Pulverbett insbesondere im Bereich des herzustellenden Bauteils mit Prozessgas beaufschlagt wird.

3. Verfahren nach Anspruch 1 oder 2,
**dadurch gekennzeichnet,**
**dass** die Strömung des Prozessgases im Wesentlichen senkrecht zur Ausgangsebene in Richtung Bauteil erfolgt.

4. Verfahren nach einem der Ansprüche 1 bis 3,
**dadurch gekennzeichnet,**
**dass** das Prozessgas vor dem Eintritt in eine Prozesskammer, in der das Bauteil hergestellt wird, temperiert wird.

5. Verfahren nach einem der Ansprüche 1 bis 4,
**dadurch gekennzeichnet,**
**dass** die Regulierung des Wärmehaushalts des Prozessgases durch Temperieren erfolgt, wobei das Temperieren das Erwärmen oder das Kühlen des Prozessgases umfasst.

6. Vorrichtung zum generativen Fertigen eines Bauteils umfassend
- eine Prozesskammer, die durch eine Kammerwandung nach außen hin abgeschlossen ist
- eine horizontal angeordnete Bauplattform zur Aufnahme des in Form eines Pulverbetts vorliegenden Ausgangsmaterials
- einen Vorratsbehälter ist zur Aufnahme eines verfestigbaren pulverförmigen Ausgangsmaterials
- eine Auftragungseinrichtung zum Aufbringen des Ausgangsmaterials auf die Bauplattform
- einen Laser zum Erzeugen eines Laserstrahls
- eine Prozessgaszuführeinrichtung
**dadurch gekennzeichnet,**
**dass** die Bauplattform eine mehrere Gaszuführöffnungen aufweisende Verteilereinrichtung zum Beaufschlagen zumindest eines Teilbereichs des Pulverbetts mit Prozessgas aus der Prozessgaszuführeinrichtung umfasst.

7. Vorrichtung nach Anspruch 6,
**dadurch gekennzeichnet,**
**dass** die Gaszuführöffnungen im Wesentlichen senkrecht zur Ausgangsebene in Richtung Bauteil verlaufen.

8. Vorrichtung nach Anspruch 6 oder 7,
**dadurch gekennzeichnet,**
**dass** die Verteilereinrichtung ein Sieb, eine membranartige Struktur, eine perforierte Folie, ein gesinterter Körper oder eine Düsenplatte ist, wobei die Verteilereinrichtung die Gaszuführöffnungen ausbildet.

9. Vorrichtung nach einem der Ansprüche 6 bis 8,
**dadurch gekennzeichnet,**
**dass** eine Temperiereinrichtung vorgesehen ist, die eine Temperierkammer zum Temperieren des Prozessgases umfasst.

10. Vorrichtung nach Anspruch 9,
**dadurch gekennzeichnet,**
**dass** in der Temperierkammer zumindest eine Düse zum Eindüsen eines Kühlmediums vorgesehen ist, um das Prozessgas mit einem Kühlmedium, beispielsweise einem kryogenen Medium aus einem Vorratsbehälter für kryogenes Medium, zu beaufschlagen.

11. Vorrichtung nach einem der Ansprüche 6 bis 10,
**dadurch gekennzeichnet,**
**dass** die Temperiereinrichtung eine Wärmeübertragungseinrichtung zum Kühlen oder Heizen des Prozessgases und die Wärmeübertragungseinrichtung zur direkten Wärmeübertragung und/oder zur indirekten Wärmeübertragung und/oder zur halbindirekten Wärmeübertragung ausgebildet ist.

12. Vorrichtung nach einem der Ansprüche 6 bis 12,
**dadurch gekennzeichnet,**
**dass** eine Verteilertemperiereinrichtung vorgesehen ist, die integraler Bestandteil der Verteilereinrichtung ist und die Kühlkanäle und/oder Heizelemente aufweist.

13. Vorrichtung nach einem der Ansprüche 6 bis 12,
**dadurch gekennzeichnet,**
**dass** eine Steuereinrichtung zum Steuern der Temperiereinrichtung vorgesehen ist, wobei die Steuereinrichtung eine Temperaturreglereinrichtung mit einem geschlossenen Regelkreis umfasst, die die Temperatur regelt.
